# FASCICULE DE BREVET EUROPEEN

(11) **EP 1 743 984 B1**
(45) Date de publication et mention de la délivrance du brevet: **06.05.2009**
(21) Numéro de dépôt: 06356072.6
(22) Date de dépôt: 19.06.2006
(51) Int. Cl.: E03F 1/00, E03B 3/03

(54) **Cellule et système de récupération d'eau**
Zelle und Wasserrückgewinnungssystem
Cell and water recovery system

(30) Priorité: 13.07.2005 FR 0507538
(43) Date de publication de la demande: 17.01.2007
(73) Titulaire: Sogemap Injection, 17290 Aigrefeuille d'Aunis (FR)
(72) Inventeur: Guicherd, Michel, 17290 Ardillieres (FR)
(74) Mandataire: Maureau, Philippe

(56) Documents cités:
- EP-A- 1 416 099

## Description

La présente invention concerne une cellule de récupération d'eau et un système de récupération d'eau comprenant une telle cellule et au moins un élément de fermeture distinct de la cellule destiné à former le fond ou le couvercle de celle-ci.

De telles cellules de récupération d'eau sont destinées à être placées de façon superposée verticalement et adjacente latéralement dans un espace creusé dans le sol puis recouvertes d'un remblai. Les cellules sont généralement surmontées d'une nappe géotextile évitant l'entrée de terre dans lesdites cellules.

Selon une première utilisation, la surface ainsi obtenue au-dessus des cellules peut par exemple servir de parking. Les eaux de pluie qui se retrouvent collectées dans les cellules peuvent être dirigées vers un système d'égouts, via des conduites connectées aux cellules. En variante, les eaux de pluie peuvent être temporairement récupérées dans les cellules jusqu'à leur absorption naturelle par la terre environnante.

Selon une deuxième utilisation, les cellules sont enveloppées d'une membrane étanche qui permet la rétention d'eau dans lesdites cellules. On obtient ainsi un bassin enterré dans lequel l'eau peut être stockée en vue de son utilisation ultérieure (par exemple pour l'arrosage), par l'intermédiaire d'un système de conduites. Ceci présente de nombreux avantages par rapport à un bassin de rétention à ciel ouvert, notamment en termes de sécurité.

Ce type de cellules est notamment connu du document EP 0 943 737. Les cellules qui y sont décrites sont constituées de deux boîtiers assemblés de façon à former un parallélépipède. Chaque boîtier comporte une base munie de perforations et des parois latérales solidaires de la base et également munies de perforations, le côté du boîtier opposé à la base étant ouvert. De plus, des colonnes s'étendent sensiblement verticalement à partir de la base en direction du côté ouvert. Les extrémités de certaines colonnes comportent des protubérances, tandis que les extrémités d'autres colonnes comportent des cavités. Ainsi, lorsque deux boîtiers similaires sont placés en ayant leurs côtés ouverts tournés l'un vers l'autre, les protubérances des colonnes d'un boîtier sont engagées dans les cavités des colonnes de l'autre boîtier et permettent de former une liaison entre les deux boîtiers pour constituer la cellule.

Avec cette structure connue, lorsque deux cellules sont empilées, ce qui en pratique représente la majorité des cas, le fond de l'une est superposé avec le couvercle de l'autre. Cette superposition entraîne des problèmes d'écoulement en gênant le passage de l'eau du fait du chevauchement des maillages du fond et du couvercle. En outre, la superposition du fond et du couvercle va à l'encontre du principe de recherche du vide maximum dans ce type de cellules.

Par ailleurs, à l'usage, l'eau de ruissellement ou les remontées de la nappe phréatique entraînent différents éléments, en fonction de la qualité du sol et de la dureté de l'eau. Ces éléments se déposent sur la nappe géotextile, la rendant imperméable, et dans les perforations de la cellule, entravant l'écoulement. La superposition d'un fond et d'un couvercle crée encore plus de zones de rétention de matière, ce qui diminue considérablement l'efficacité des cellules.

Le document EP 1 416 099 décrit une cellule sensiblement parallélépipédique comportant une paroi latérale à quatre côtés, un côté supérieur formé de barres entrecroisées constituant une paroi transversale munie d'orifices, et un côté inférieur totalement ouvert, dépourvu de toute paroi transversale.

Les cellules sont disposées comme suit : on place tout d'abord une base au fond de l'espace creusé dans le sol, puis on empile les cellules sur cette base. Entre deux cellules adjacentes verticalement se trouve donc une paroi transversale, constituée par le côté supérieur de la cellule inférieure. En conséquence, on retrouve les problèmes précités, bien que dans une moindre mesure car on n'a qu'une paroi transversale - et non deux superposées - entre deux cellules adjacentes.

De plus, les cellules connues sont difficiles à nettoyer, du fait de la présence de colonnes occupant une grande partie de l'espace intérieur du boîtier.

La présente invention vise à remédier aux inconvénients mentionnés ci-dessus.

A cet effet, et selon un premier aspect, l'invention concerne une cellule de récupération d'eau obtenue par moulage d'une seule pièce d'une matière plastique, comprenant :
- une paroi latérale comportant quatre côtés définissant un volume intérieur sensiblement parallélépipédique et dans chacun desquels sont ménagés des orifices ;
- une pluralité de colonnes s'étendant sensiblement parallèlement aux côtés de la paroi latérale, chaque colonne possédant une hauteur sensiblement égale à celle de la paroi latérale et étant sensiblement logée dans ledit volume intérieur ;
les côtés supérieur et inférieur de la cellule étant ouverts et dépourvus de paroi transversale et les colonnes étant liées entre elles et à la paroi latérale par une cloison intermédiaire dans laquelle sont ménagés des orifices.

Par « côtés ouverts » ou « côtés dépourvus de paroi transversale », on entend que la cellule ne comporte ni fond ni couvercle intégrés. Le volume parallélépipédique qu'elle définit est limité latéralement par la paroi latérale mais verticalement (en position d'utilisation de la cellule) par aucune paroi s'étendant d'un côté à un autre de la paroi latérale. En d'autres termes, les côtés inférieur et supérieur de la cellule étant sensiblement totalement ouverts, et non formés d'une paroi transversale munie d'ouvertures.

Selon un deuxième aspect, l'invention concerne un système de récupération d'eau comprenant au moins une telle cellule et au moins un élément de fermeture distinct de la cellule et destiné à former le fond ou le couvercle de celle-ci.

Le fond et le couvercle sont mis en place uniquement lorsque cela est nécessaire, c'est-à-dire uniquement sous la cellule la plus au-dessous et sur la cellule la plus au-dessus d'une ensemble de cellules empilées.

Ainsi, lorsque plusieurs cellules sont empilées, il n'existe pas de paroi transversale entre deux cellules immédiatement superposées. Cette structure favorise le passage d'eau, limite des salissures entre les cellules et permet de réaliser une économie de matière. On obtient ainsi un système allégé, présentant davantage de vide et une efficacité accrue tout en conservant une rigidité satisfaisante. En effet, il a été constaté que les parois latérales et les colonnes suffisent à assurer la rigidité de la cellule, sans qu'il soit nécessaire de prévoir une paroi intermédiaire, et encore moins de doubler cette paroi (fond et couvercle), pour obtenir la résistance mécanique adaptée.

Il est à noter que la cellule est complète et non réalisée par l'assemblage de deux boîtiers superposés comme cela était le cas dans l'art antérieur.

Selon une réalisation possible, les colonnes sont disposées de façon à ménager, d'un côté au moins de la cloison intermédiaire, un passage s'étendant longitudinalement depuis un côté de la paroi latérale vers le côté opposé de ladite paroi latérale, des ouvertures étant ménagées dans lesdits côtés de la paroi latérale en regard dudit passage. Ce passage, avantageusement disposé de façon centrée, permet un nettoyage aisé de la cellule.

Au moins une colonne peut comporter une première extrémité ouverte et une deuxième extrémité présentant un téton faisant saillie au-delà du volume intérieur parallélépipédique de la cellule, ledit téton étant destiné à être emboîté dans la première extrémité ouverte d'une colonne appartenant à une cellule située immédiatement au-dessus ou en dessous, la colonne de la cellule située au-dessus prenant appui sur la colonne de la cellule située au-dessous. Cette structure permet à une cellule de prendre appui sur la cellule placée immédiatement au-dessous et d'éviter le décalage latéral mutuel des deux cellules empilées. Avantageusement, chaque colonne comporte une première extrémité ouverte et une deuxième extrémité présentant un téton en saillie, les tétons des différentes colonnes étant situés d'un même côté de la cloison intermédiaire.

La cloison intermédiaire forme par exemple un réseau en nid d'abeille, ce qui améliore la rigidité de la cellule.

La cloison intermédiaire peut être sensiblement orthogonale aux côtés de la paroi latérale et située à mi hauteur de la cellule. Cette cloison peut en outre présenter une hauteur faible par rapport à la hauteur de la cellule, par exemple inférieure à 10% de la hauteur de la cellule. A titre d'exemple, la hauteur de la cloison intermédiaire peut être de l'ordre de 25 à 30 mm pour une hauteur de cellule de l'ordre de 50 cm.

Selon une réalisation possible, des ailes relient les colonnes à la cloison intermédiaire. Ceci favorise la stabilisation des colonnes et donc la rigidité de la cellule. Par exemple, les ailes s'étendent sensiblement perpendiculairement à la cloison intermédiaire, au moins d'un côté de celle-ci, sur une hauteur inférieure à la moitié de la hauteur d'une colonne

Avantageusement, les colonnes présentent une section transversale hexagonale.

Par exemple, la paroi latérale comporte un premier bord présentant des cavités et un deuxième bord présentant des ergots en saillie, lesdits ergots étant destinés à être engagés dans les cavités ménagées dans le premier bord de la paroi latérale d'une cellule située immédiatement au-dessus ou en dessous.

La paroi latérale peut présenter une forme globalement ondulée, formée par la succession de portions en saillie et de portions en retrait orientées sensiblement parallèlement aux colonnes.

Selon une réalisation possible, deux côtés opposés de la paroi latérale comprennent chacun une ouverture destinée à permettre le nettoyage de la cellule et une ouverture destinée à être raccordée à une conduite pour permettre l'évacuation de l'eau contenue dans la cellule.

L'élément de fermeture comprend par exemple un panneau formé d'un réseau en nid d'abeille. Il peut en outre comprendre une ou plusieurs pattes en saillie par rapport au panneau, agencées pour pouvoir coopérer avec au moins une extrémité d'une colonne de la cellule et permettre le positionnement de l'élément de fermeture par rapport à la cellule, et/ou au moins un crochet de clippage permettant de fixer ledit élément de fermeture sur la cellule.

On décrit à présent, à titre d'exemple non limitatif, une forme de réalisation possible de l'invention, en référence aux figures annexées :

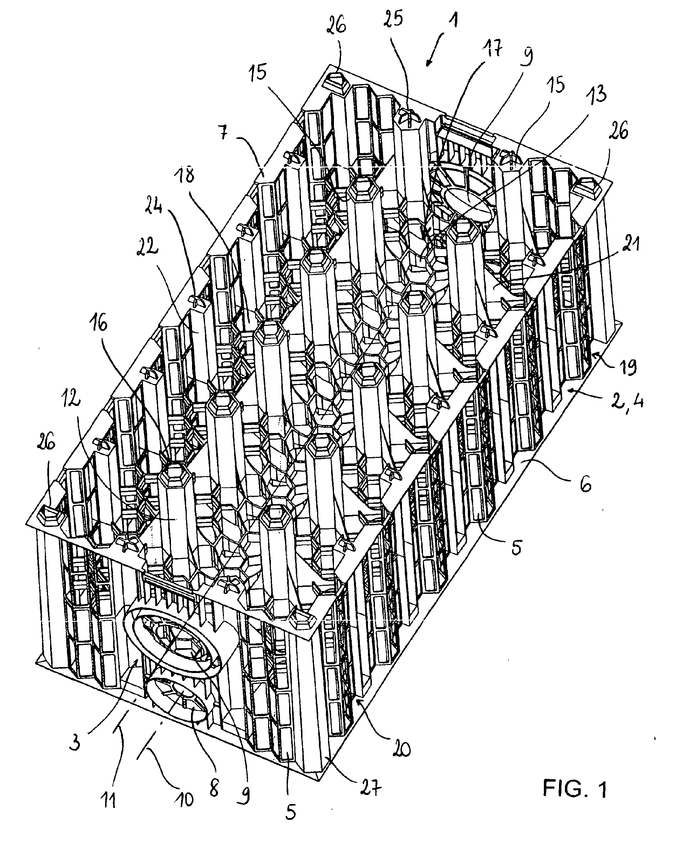

La figure 1 est une vue en perspective d'une cellule selon l'invention, vue de dessus ;

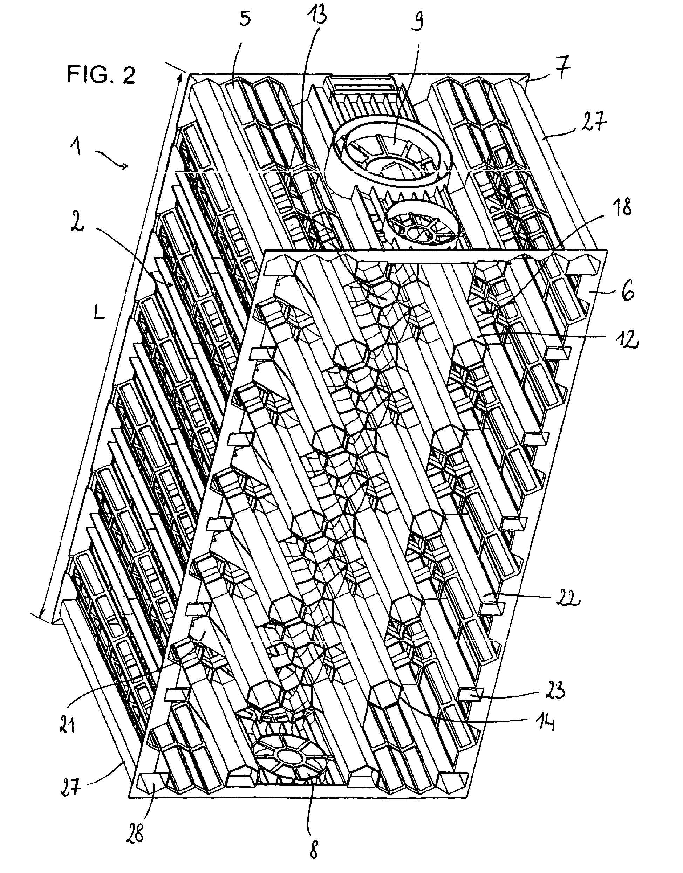

La figure 2 est une vue en perspective de la cellule de la figure 1, vue de dessous ;
La figure 3 est une vue latérale de la cellule ;
La figure 4 est une vue latérale d'un système de récupération d'eau comportant deux cellules empilées, un fond et un couvercle ;
La figure 5 est une vue de détail en coupe montrant la coopération entre les colonnes de deux cellules superposées ;
La figure 6 est une vue latérale d'un élément de fermeture ;
Les figures 7 et 8 sont des vues en perspective de l'élément de la figure 6, respectivement vu de dessus et vu de dessous ;
La figure 9 est une vue en section d'une cellule équipée d'un fond et d'un couvercle, correspondant à la ligne AA de la figure 3 ;
La figure 10 est une vue partielle en perspective montrant l'élément de fermeture associé à une cellule ;
La figure 11 est une vue de détail de l'extrémité d'une colonne associée à l'élément de fermeture ;
La figure 12 est une vue de détail montrant un crochet de clippage de l'élément de fermeture sur la cellule ;
La figure 13 est une vue latérale de deux éléments de fermeture empilés ; et
Les figures 14 et 15 sont des vues en perspective de deux éléments de fermeture empilés.

Une cellule de récupération d'eau 1 comprend une paroi latérale 2 définissant un volume intérieur sensiblement parallélépipédique. La paroi latérale 2 comporte quatre côtés, à savoir deux petits côtés 3 et deux grands côtés 4, tous pourvus d'orifices 5 pour le passage de l'eau.

La cellule 1 est destinée à être positionnée de façon que les côtés 3, 4 soient sensiblement verticaux, et c'est dans cette position qu'elle sera décrite pour plus de commodité. On définit la direction « longitudinale » comme la direction horizontale sensiblement parallèle aux grands côtés 4 de la paroi latérale 2.

Les côtés supérieur et inférieur de la cellule 1 sont ouverts. La paroi latérale 2 présente ainsi un bord inférieur 6 et un bord supérieur 7 sensiblement plans et horizontaux.

Dans chacun des petits côtés 3 sont ménagées une première et une deuxième ouvertures 8, 9 circulaires dont les axes 10, 11 sont longitudinaux, situés à égale distance des grands côtés 4, et alignés verticalement. La première ouverture 8 est située sous la deuxième ouverture 9, et présente un diamètre moindre. Les premières ouvertures 8 des deux petits côtés 3 présentent le même axe 10, et les deuxièmes ouvertures 9 des deux petits côtés 3 présentent le même axe 11.

La cellule 1 comporte également une pluralité de colonnes 12 sensiblement verticales, liées entre elles et à la paroi latérale 2 par une cloison intermédiaire 13 sensiblement horizontale et située à mi hauteur de la cellule 1.

Les colonnes 12 comprennent une extrémité inférieure 14 située sensiblement dans le même plan que le bord inférieur 6 de la paroi latérale 2 et une extrémité supérieure 15 située sensiblement dans le même plan que le bord supérieur 7 de la paroi latérale 2, mais de laquelle fait saillie un téton 16, au-delà du volume intérieur parallélépipédique de la cellule 1. Les colonnes 12 présentent une section transversale sensiblement hexagonale creuse sur toute leur hauteur, l'extrémité inférieure 14 de chaque colonne 12 étant ouverte.

Dans la réalisation représentée, la cellule 1 comporte deux séries longitudinales de colonnes 12 disposées de part et d'autre des axes 10, 11, et définissant un passage 17 longitudinal sensiblement central débouchant dans les deuxièmes ouvertures 9. Chaque série comporte ici sept colonnes 12 régulièrement espacées, les colonnes 12 des extrémités n'étant pas totalement isolées mais liées par une portion verticale à un petit côté 3 de la paroi latérale 2.

Entre ies deux séries de colonnes 12 est donc réservé un espace permettant le passage, via la deuxième ouverture 9, d'un furet de gros diamètre. Il est ainsi possible de procéder au nettoyage de la cellule 1 avec de l'eau sous pression. L'efficacité du nettoyage est encore accrue par la forme hexagonale des colonnes, qui dévient le jet d'eau

La cloison intermédiaire 13 est formée d'un réseau en nid d'abeille, et comporte donc une pluralité d'orifices 18. Compte tenu de cette structure en nid d'abeille, s'étendant jusqu'à la paroi latérale 2, et de la forme hexagonale des colonnes 12, la paroi latérale 2 présente une forme ondulée, formée par une succession de portions en saillie 19 et de portions en retrait 20.

En outre, des ailes 21 relient chaque colonne 12 à la cloison intermédiaire 13. Ces ailes 21 sont formées par le prolongement vertical, au-dessus de la cloison intermédiaire 13, de certains bords des hexagones du nid d'abeille adjacents à la colonne 12 considérée. Par exemple, quatre ailes 21 sont ménagées autour de chaque colonne 12. Au niveau du passage 17, la cloison intermédiaire 13 n'est pas plane mais « remonte » en quelque sorte vers les colonnes 12, présentant ainsi une forme incurvée et formant un passage 17 dont la moitié inférieure est sensiblement cylindrique.

Les grands côtés 4 de la paroi latérale 2 présentent chacun des montants 22 verticaux en saillie vers l'intérieur de la cellule 1. Les montants 22 présentent une section rectangulaire et sont situés entre deux colonnes 12. Leur extrémité inférieure forme une cavité 23 et leur extrémité supérieure, située dans le plan du bord supérieur 7 de la paroi latérale 2, porte un ergot 24 en croix de dimensions correspondantes à celles de la cavité 23. Un ergot 25 similaire, mais en étoile, fait saillie au-dessus du bord supérieur 7 de la paroi latérale 2 depuis l'extrémité supérieure 15 de chacune des colonnes 12 liées aux petits côtés 3.

Enfin, une protubérance 26 fait saillie du bord supérieur 7 de la paroi latérale 2 à chaque coin de la cellule 1, en partie supérieure d'un montant d'angle 27 dont l'extrémité inférieure forme une cavité 28.

L'ensemble de la cellule 1 (paroi latérale 2, colonnes 12, cloison intermédiaire 13, etc.) est réalisé d'une seule pièce par moulage par injection d'une polyoléfine telle que le polypropylène ou le polyéthylène haute densité.

La cellule 1 ainsi obtenue possède approximativement les dimensions suivantes :
- hauteur H : 50 cm ;
- longueur L : 120 cm ;
- largeur ℓ : 60 cm.

La cellule 1 présente un taux de vide très important pour pouvoir loger un grand volume d'eau, et de nombreux orifices pour permettre un écoulement de cette eau. Malgré ce fort taux de vide, la cellule 1 est très résistante, de par la présence des colonnes 12, de hauteur sensiblement égale à celle de la paroi latérale et réparties de façon sensiblement régulière, qui assurent la rigidité verticale.

Afin de remplir le volume souhaité, on place plusieurs cellules 1 de façon superposée verticalement et adjacente latéralement. Des cellules adjacentes latéralement peuvent être assemblées les unes aux autres par des cavaliers (non représentés).

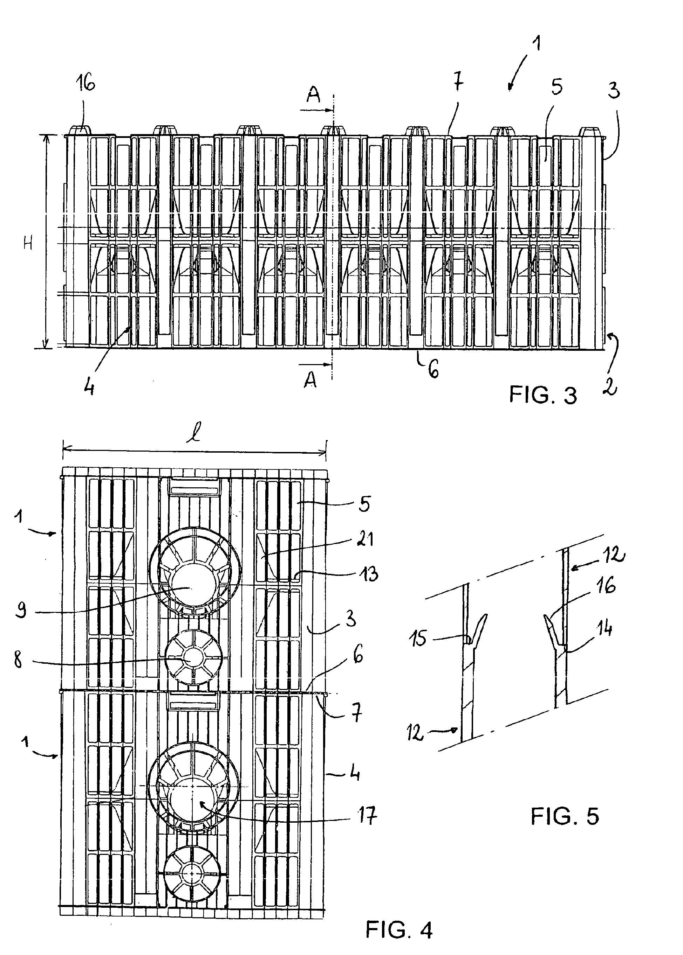

Comme illustré sur les figures 4 et 5, la superposition de deux cellules 1 se fait sans interposition d'élément intermédiaire. Dans la réalisation représentée, une cellule 1 est positionnée de sorte que les tétons 16 soient situés au-dessus, mais la disposition inverse peut être envisagée.

Les tétons 16 de la cellule 1 située au-dessous sont engagés dans les extrémités inférieures 14 ouvertes des colonnes 12 de la cellule 1 située au-dessus (voir figure 5). L'épaisseur de la paroi des colonnes 12 diminuant depuis l'extrémité supérieure 15 (où elle est de l'ordre de 6 mm) vers l'extrémité inférieure 14 (où elle est de l'ordre de 2 mm), l'extrémité inférieure 14 d'une colonne 12 peut prendre appui sur l'extrémité supérieure 15 de la colonne 12 située au-dessous, autour du téton 16.

En outre, le bord inférieur 6 de la cellule 1 du dessus repose sur le bord supérieur 7 de la cellule 1 du dessous, les ergots 24 et 25 et les protubérances 26 de la cellule 1 du dessous étant engagés respectivement dans les cavités 23 des montants 22 de la cellule 1 du dessus, l'exirémité inférieure 14 des colonnes 12 liées aux petits côtés 3, et la cavité 28 formée dans l'extrémité inférieure des montants d'angle 27.

Bien entendu, les différents éléments destinés à coopérer lors de l'empilement de deux cellules identiques présentent des formes et des dimensions complémentaires permettant un emboîtement aisé mais un maintien efficace des deux cellules l'une sur l'autre.

On obtient ainsi un excellent centrage des cellules 1, et une très bonne rigidité de l'ensemble, les colonnes 12 de la ceiiuie 1 située au-dessus prenant appui que les colonnes 12 de la cellule 1 située au-dessous.

Un élément de fermeture 29 est placé d'une part au-dessus de la cellule 1 la plus haut dessus et d'autre part au-dessous de la cellule 1 la plus au-dessous. Cet élément 29, distinct de la cellule 1, sert donc selon les cas de fond ou de couvercle. Son épaisseur est de l'ordre de 2 cm. Il est formé, séparément de la cellule 1, par moulage par injection d'une polyoléfine telle que le polypropylène ou le polyéthylène haute densité.

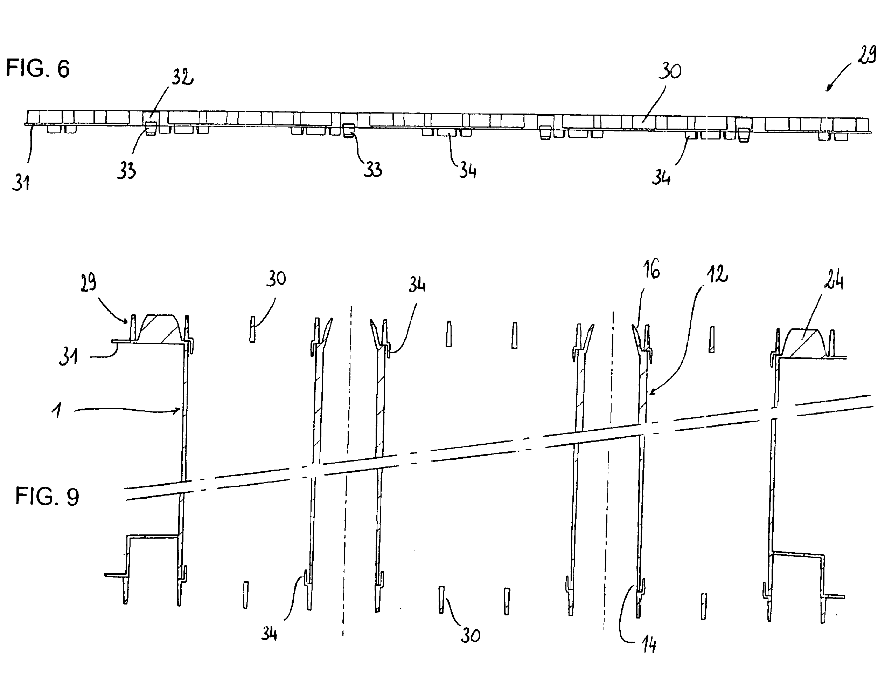

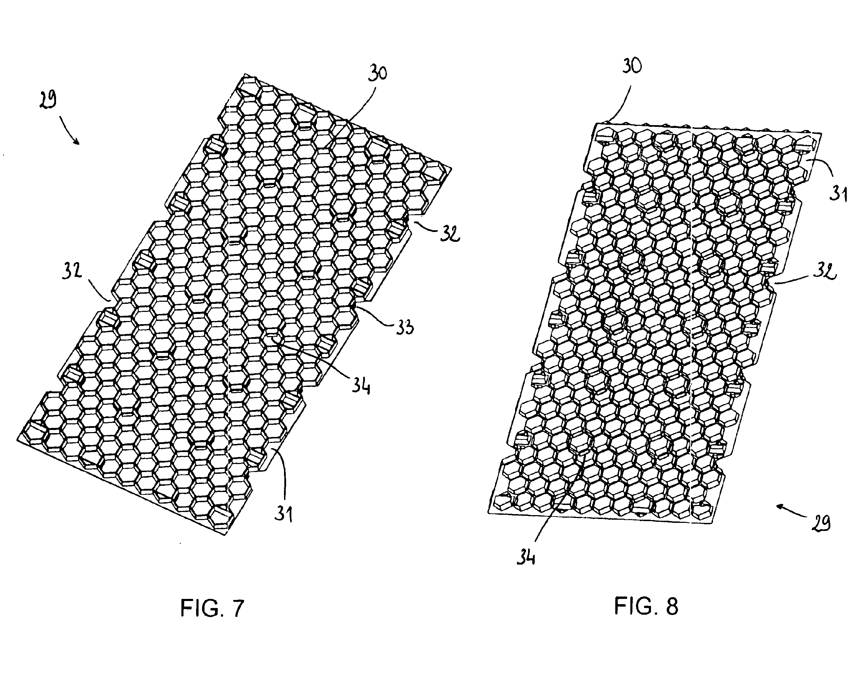

L'élément de fermeture 29, tel qu'illustré sur les figures 6 à 8, comprend un panneau rectangulaire formé d'un réseau en nid d'abeille 30, prolongé latéralement par un rebord 31 définissant un plan. Le réseau en nid d'abeille 30 fait saillie d'un premier côté de ce plan uniquement (voir figure 6).

Des encoches 32 sont ménagées dans les bords de l'élément de fermeture 29. Dans la réalisation représentée, chacun des grands côtés du rebord 31 comporte quatre encoches 32 régulièrement espacées. Dans chaque encoche se situe un crochet 33 de clippage permettant de fixer l'élément de fermeture 29 sur la cellule 1.

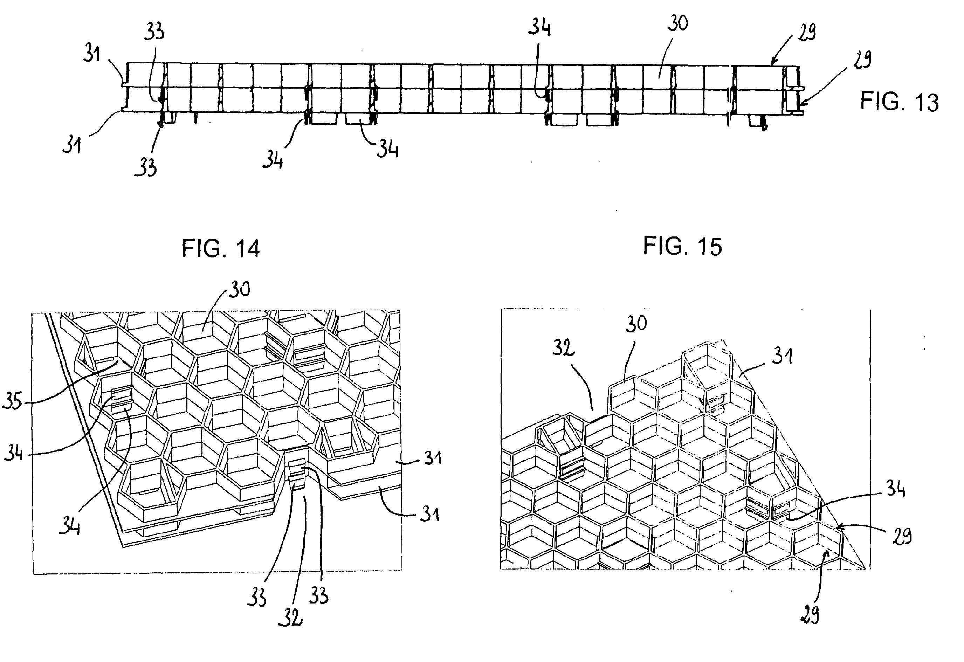

En outre, chaque hexagone de l'élément de fermeture 29 destiné à être placé en regard d'une colonne 12 d'une cellule 1 comporte six pattes 34 faisant saillie sensiblement en prolongement des côtés dudit hexagone depuis le deuxième côté du plan formé par le rebord 31 (c'est-à-dire à l'opposé du réseau en nid d'abeille 30. Ces pattes 34 ne sont pas jointives, un espace 35 existant entre elles pour permettre l'empilement des éléments de fermeture 29 pour leur stockage (figures 13 à 15).

La mise en place d'un élément de fermeture 29 sur une cellule 1 s'effectue comme suit (figure 9).

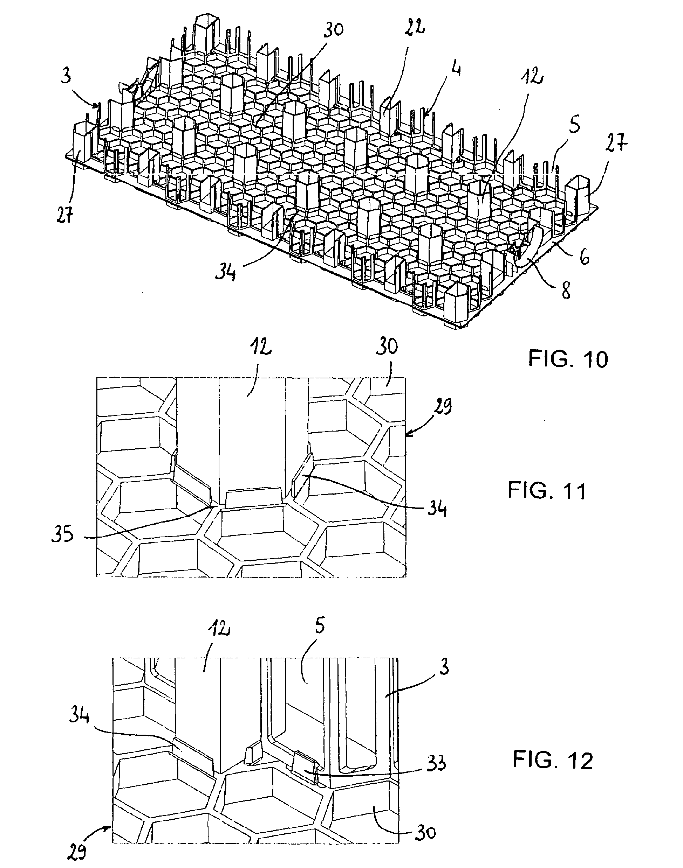

Si l'élément de fermeture 29 joue le rôle de fond, le réseau en nid d'abeille 30 est tourné vers le bas, et la cellule 1 est disposée sur l'élément 29, la première extrémité 14 des colonnes 12 étant engagée entre les pattes 34 (voir notamment figures 9, 10, 11). Ceci assure un positionnement correct de l'élément 29 par rapport à la cellule 1 et un maintien satisfaisant.

Si l'élément de fermeture 29 joue le rôle de couvercle, le réseau en nid d'abeille 30 est tourné vers le haut, au-dessus de la cellule 1, les pattes 34 étant placées autour de l'extrémité supérieure 15 et du téton 16 des colonnes 12.

Ainsi, quel que soit le nombre de cellules 1 empilées, un seul fond et un seul couvercle (soit deux éléments de fermeture 29 identiques) sont nécessaires. Ceci représente un gain de matière important, car les cas où une seule cellule est nécessaire en hauteur sont peu nombreux. En règle générale, et compte tenu des volumes d'eau à collecter, on empile au moins deux cellules, et souvent trois, voire quatre.

Au-dessus de l'élément de fermeture 29 formant couvercle, on place une nappe géotextile, permettant d'éviter que la terre située au-dessus des cellules ne tombe dans lesdites cellules, ce qui diminuerait le volume d'eau pouvant être récupéré. Cette nappe géotextile a, tout comme les cellules, tendance à retenir des matières, ce qui nuit à l'écoulement de l'eau. Grâce à l'invention, et plus précisément au passage 17 ménagé entre les colonnes 12, l'introduction d'un furet de grandes dimensions et d'eau sous pression permet également de décolmater la nappe géotextile.

Selon une application possible, on entoure les cellules 1 superposées d'une membrane étanche permettant de retenir l'eau collectée dans les cellules et d'éviter son absorption par la terre environnante. L'eau peut ensuite être dirigée vers un système d'égouts ou conservée dans les cellules qui servent alors de bac de récupération des eaux pluviales (par exemple pour l'arrosage). Un tuyau peut être connecté à la première ouverture 8 en vue d'un pompage de cette eau, par exemple.

Il va de soi que l'invention n'est pas limitée à la forme de réalisation décrite ci-dessus à titre d'exemple mais qu'elle en embrasse au contraire toutes les variantes de réalisation.

## Revendications

1. Cellule de récupération d'eau obtenue par moulage d'une seule pièce d'une matière plastique, comprenant :
- une paroi latérale (2) comportant quatre côtés (3, 4) définissant un volume intérieur sensiblement parallélépipédique et dans chacun desquels sont ménagés des orifices (5) ;
- une pluralité de colonnes (12) s'étendant sensiblement parallèlement aux côtés de la paroi latérale (2), chaque colonne (12) possédant une hauteur sensiblement égale à celle de la paroi latérale (2) et étant sensiblement logée dans ledit volume intérieur ;
**caractérisée en ce que** les côtés supérieur et inférieur de la cellule (1) sont ouverts et dépourvus de paroi transversale et **en ce que** les colonnes (12) sont liées entre elles et à la paroi latérale (2) par une cloison intermédiaire (13) dans laquelle sont ménagés des orifices (18).

2. Cellule selon la revendication 1, **caractérisée en ce que** les colonnes (12) sont disposées de façon à ménager, d'un côté au moins de la cloison intermédiaire (13), un passage (17) s'étendant longitudinalement depuis un côté de la paroi latérale (2) vers le côté opposé de ladite paroi latérale (2), des ouvertures (9) étant ménagées dans lesdits côtés (3) de la paroi latérale (2) en regard dudit passage (17).

3. Cellule selon la revendication 1 ou 2, **caractérisée en ce qu'**au moins une colonne (12) comporte une première extrémité (14) ouverte et une deuxième extrémité (15) présentant un téton (16) faisant saillie au-delà du volume intérieur parallélépipédique de la cellule (1), ledit téton (16) étant destiné à être emboîté dans la première extrémité (14) ouverte d'une colonne (12) appartenant à une cellule (1) située immédiatement au-dessus ou en dessous, la colonne (12) de la cellule (1) située au-dessus prenant appui sur la colonne (12) de la cellule (1) située au-dessous.

4. Cellule selon la revendication 3, **caractérisée en ce que** chaque colonne (12) comporte une première extrémité (14) ouverte et une deuxième extrémité (15) présentant un téton (16) en saillie, les tétons (16) des différentes colonnes (12) étant situés d'un même côté de la cloison intermédiaire (13).

5. Cellule selon l'une des revendications 1 à 4, **caractérisée en ce que** la cloison intermédiaire (13) forme un réseau en nid d'abeille.

6. Cellule selon l'une des revendications 1 à 5, **caractérisée en ce que** la cloison intermédiaire (13) est sensiblement orthogonale aux côtés (3, 4) de la paroi latérale (2) et située à mi hauteur de la cellule (1).

7. Cellule selon l'une des revendications 1 à 6, **caractérisée en ce que** la cloison intermédiaire (13) présente une hauteur faible par rapport à la hauteur (H) de la cellule (1).

8. Cellule selon l'une des revendications 1 à 7, **caractérisée en ce qu'**elle comprend des ailes (21) reliant les colonnes (12) à la cloison intermédiaire (13).

9. Cellule selon l'une des revendications 1 à 8, **caractérisée en ce que** les colonnes (12) présentent une section transversale hexagonale.

10. Cellule selon l'une des revendications 1 à 9, **caractérisée en ce que** la paroi latérale (2) comporte un premier bord (6) présentant des cavités (23, 28) et un deuxième bord (7) présentant des ergots (24, 25, 26) en saillie, lesdits ergots étant destinés à être engagés dans les cavités ménagées dans le premier bord de la paroi latérale (2) d'une cellule (1) située immédiatement au-dessus ou en dessous.

11. Cellule selon l'une des revendications 1 à 10, **caractérisée en ce que** la paroi latérale (2) présente une forme globalement ondulée, formée par la succession de portions en saillie (19) et de portions en retrait (20) orientées sensiblement parallèlement aux colonnes (12).

12. Cellule selon l'une des revendications 1 à 11, **caractérisée en ce que** deux côtés opposés (3) de la paroi latérale (2) comprennent chacun une ouverture (9) destinée à permettre le nettoyage de la cellule (1) et une ouverture (8) destinée à être raccordée à une conduite pour permettre l'évacuation de l'eau contenue dans la cellule (1).

13. Système de récupération d'eau comprenant au moins une cellule (1) selon l'une des revendications précédentes, **caractérisé en ce qu'**il comprend en outre au moins un élément de fermeture (29) distinct de la cellule (1) et destiné à former le fond ou le couvercle de celle-ci.

14. Système selon la revendication 13, **caractérisé en ce que** l'élément de fermeture (29) comprend un panneau formé d'un réseau en nid d'abeille (30).

15. Système selon la revendication 13 ou 14, **caractérisé en ce que** l'élément de fermeture (29) comprend une ou plusieurs pattes (34) en saillie par rapport au panneau, agencées pour pouvoir coopérer avec au moins une extrémité d'une colonne (12) de la cellule (1) et permettre le positionnement de l'élément de fermeture (29) par rapport à la cellule (1).

16. Système selon l'une des revendications 13 à 15, **caractérisé en ce que** l'élément de fermeture (29) comprend au moins un crochet de clippage (33) permettant de fixer ledit élément de fermeture (29) sur la cellule (1).

## Claims

1. Water recovery cell obtained by a one-piece plastic moulding process, comprising:
- a lateral wall (2) having four sides (3, 4) defining a substantially parallelepipedal internal volume and in each of which are formed orifices (5);
- a plurality of columns (12) extending substantially parallel to the sides of the lateral wall (2), each column (12) having a height substantially equal to that of the lateral wall (2) and being substantially accommodated within the said internal volume;
**characterized in that** the upper and lower sides of the cell (1) are open and are not provided with a transverse wall, and **in that** the columns (12) are connected to one another and to the lateral wall (2) by an intermediate partition (13) in which orifices (18) are formed.

2. Cell according to Claim 1, **characterized in that** the columns (12) are arranged in such a way as to form, on at least one side of the intermediate partition (13), a passage (17) extending longitudinally from one side of the lateral wall (2) to the opposite side of the said lateral wall (2), openings (9) being formed in the said sides (3) of the lateral wall (2) facing the said passage (17).

3. Cell according to Claim 1 or 2, **characterized in that** at least one column (12) has a first open end (14) and a second end (15) having a spigot (16) projecting beyond the parallelepipedal internal volume of the cell (1), the said spigot (16) being intended to be fitted into the first open end (14) of a column (12) belonging to a cell (1) situated immediately above or below, the column (12) of the cell (1) situated above bearing on the column (12) of the cell (1) situated below.

4. Cell according to Claim 3, **characterized in that** each column (12) has a first open end (14) and a second end (15) having a projecting spigot (16), the spigots (16) of the various columns (12) being situated on the same side of the intermediate partition (13).

5. Cell according to one of Claims 1 to 4, **characterized in that** the intermediate partition (13) forms a honeycomb grid.

6. Cell according to one of Claims 1 to 5, **characterized in that** the intermediate partition (13) is substantially orthogonal to the sides (3, 4) of the lateral wall (2) and situated halfway up the cell (1).

7. Cell according to one of Claims 1 to 6, **characterized in that** the intermediate partition (13) has a small height compared with the height (H) of the cell (1).

8. Cell according to one of Claims 1 to 7, **characterized in that** it comprises wings (21) connecting the columns (12) to the intermediate partition (13).

9. Cell according to one of Claims 1 to 8, **characterized in that** the columns (12) have a hexagonal cross section.

10. Cell according to one of Claims 1 to 9,
**characterized in that** the lateral wall (2) has a first edge (6) having cavities (23, 28) and a second edge (27) having projecting lugs (24, 25, 26), the said lugs being intended to be engaged in the cavities formed in the first edge of the lateral wall (2) of a cell (1) situated immediately above or below.

11. Cell according to one of Claims 1 to 10, **characterized in that** the lateral wall (2) has a generally corrugated shape formed by a succession of projecting portions (19) and recessed portions (20) oriented substantially parallel to the columns (12).

12. Cell according to one of Claims 1 to 11, **characterized in that** two opposite sides (3) of the lateral wall (2) each comprise an opening (9) intended to enable the cell (1) to be cleaned, and an opening (8) intended to be connected to a pipe to enable the water contained in the cell (1) to be discharged.

13. Water recovery system comprising at least one cell (1) according to one of the preceding claims, **characterized in that** it additionally comprises at least one closure element (29) separate from the cell (1) and intended to form the bottom or the cover thereof.

14. System according to Claim 13, **characterized in that** the closure element (29) comprises a panel formed by a honeycomb grid (30).

15. System according to Claim 13 or 14, **characterized in that** the closure element (29) comprises one or more tabs (34) projecting with respect to the panel, these tabs being designed to be able to cooperate with at least one end of a column (12) of the cell (1) and to enable the closure element (29) to be positioned with respect to the cell (1).

16. System according to one of Claims 13 to 15, **characterized in that** the closure element (29) comprises at least one clipping hook (33) for fastening the said closure element (29) to the cell (1).

## Patentansprüche

1. Wasserrückgewinnungszelle, die durch einteiliges Formen eines Kunststoffs erhalten wird und aufweist:
- eine Seitenwand (2) mit vier Seiten (3, 4), die ein im Wesentlichen parallelepipedisches Innenvolumen definieren und in jeder von denen Öffnungen (5) ausgespart sind,
- mehrere Säulen (12), die sich im Wesentlichen parallel zu den Seiten der Seitenwand (2) erstrecken, wobei jede Säule (12) eine Höhe im Wesentlichen gleich derjenigen der Seitenwand (2) besitzt und im Wesentlichen im Innenvolumen angeordnet ist;
**dadurch gekennzeichnet, dass** die obere und die untere Seite der Zelle (1) offen sind und keine Querwand aufweisen, und dass die Säulen (12) miteinander und mit der Seitenwand (2) über eine Zwischentrennwand (13) verbunden sind, in der Öffnungen (18) ausgespart sind.

2. Zelle nach Anspruch 1, **dadurch gekennzeichnet, dass** die Säulen (12) so angeordnet sind, dass sie auf mindestens einer Seite der Zwischentrennwand (13) einen Durchgang (17) freilassen, der sich in Längsrichtung von einer Seite der Seitenwand (2) zur entgegengesetzten Seite der Seitenwand (2) erstreckt, wobei Öffnungen (9) in den Seiten (3) der Seitenwand (2) gegenüber dem Durchgang (17) ausgespart sind.

3. Zelle nach Anspruch 1 oder 2, **dadurch gekennzeichnet, dass** mindestens eine Säule (12) ein erstes offenes Ende (14) und ein zweites Ende (15) mit einem Ansatz (16) aufweist, der über das parallelepipedische Innenvolumen der Zelle (1) hinaus vorsteht, wobei der Ansatz (16) dazu bestimmt ist, in das erste offene Ende (14) einer Säule (12) eingesetzt zu werden, die zu einer Zelle (1) gehört, welche sich direkt darüber oder darunter befindet, wobei die Säule (12) der oben befindlichen Zelle (1) sich auf die Säule (12) der unten befindlichen Zelle (1) stützt.

4. Zelle nach Anspruch 3, **dadurch gekennzeichnet, dass** jede Säule (12) ein erstes offenes Ende (14) und ein zweites Ende (15) mit einem vorstehenden Ansatz (16) aufweist, wobei die Ansätze (16) der verschiedenen Säulen (12) sich auf der gleichen Seite der Zwischentrennwand (13) befinden.

5. Zelle nach einem der Ansprüche 1 bis 4, **dadurch gekennzeichnet, dass** die Zwischentrennwand (13) ein wabenförmiges Gitter bildet.

6. Zelle nach einem der Ansprüche 1 bis 5, **dadurch gekennzeichnet, dass** die Zwischentrennwand (13) im Wesentlichen orthogonal zu den Seiten (3, 4) der Seitenwand (2) ist und sich auf halber Höhe der Zelle (1) befindet.

7. Zelle nach einem der Ansprüche 1 bis 6, **dadurch gekennzeichnet, dass** die Zwischentrennwand (13) eine bezüglich der Höhe (H) der Zelle (1) geringe Höhe hat.

8. Zelle nach einem der Ansprüche 1 bis 7, **dadurch gekennzeichnet, dass** sie Flügel (21) aufweist, die die Säulen (12) mit der Zwischentrennwand (13) verbinden.

9. Zelle nach einem der Ansprüche 1 bis 8, **dadurch gekennzeichnet, dass** die Säulen (12) einen sechseckigen Querschnitt aufweisen.

10. Zelle nach einem der Ansprüche 1 bis 9, **dadurch gekennzeichnet, dass** die Seitenwand (2) einen ersten Rand (6) mit Hohlräumen (23, 28) und einen zweiten Rand (7) mit vorstehenden Nasen (24, 25, 26) aufweist, wobei die Nasen dazu bestimmt sind, in die im ersten Rand der Seitenwand (2) einer Zelle (1) ausgesparten Hohlräume eingeführt zu werden, die sich direkt darüber oder darunter befindet.

11. Zelle nach einem der Ansprüche 1 bis 10, **dadurch gekennzeichnet, dass** die Seitenwand (2) eine global gewellte Form aufweist, die durch die Aufeinanderfolge von vorstehenden Abschnitten (19) und von zurückweichenden Abschnitten (20) gebildet wird, die im Wesentlichen parallel zu den Säulen (12) ausgerichtet sind.

12. Zelle nach einem der Ansprüche 1 bis 11, **dadurch gekennzeichnet, dass** zwei entgegengesetzte Seiten (3) der Seitenwand (2) je eine Öffnung (9), die dazu bestimmt ist, das Reinigen der Zelle (1) zu ermöglichen, und eine Öffnung (8) aufweisen, die dazu bestimmt ist, an eine Leitung angeschlossen zu werden, um das Entfernen des in der Zelle (1) enthaltenen Wassers zu erlauben.

13. Wasserrückgewinnungssystem, das mindestens eine Zelle (1) nach einem der vorhergehenden Ansprüche aufweist, **dadurch gekennzeichnet, dass** es außerdem mindestens ein von der Zelle (1) getrenntes Verschlusselement (29) aufweist, das dazu bestimmt ist, deren Boden oder Deckel zu bilden.

14. System nach Anspruch 13, **dadurch gekennzeichnet, dass** das Verschlusselement (29) eine Platte aufweist, die von einem wabenförmigen Gitter (30) gebildet wird.

15. System nach Anspruch 13 oder 14, **dadurch gekennzeichnet, dass** das Verschlusselement (29) eine oder mehrere bezüglich der Platte vorstehende Laschen (34) aufweist, die angeordnet sind, um mit mindestens einem Ende einer Säule (12) der Zelle (1) zusammenwirken zu können und die Positionierung des Verschlusselements (29) bezüglich der Zelle (1) zu erlauben.

16. System nach einem der Ansprüche 13 bis 15, **dadurch gekennzeichnet, dass** das Verschlusselement (29) mindestens einen Einschnapphaken (33) aufweist, der es ermöglicht, das Verschlusselement (29) an der Zelle (1) zu befestigen.
